Europäisches Patentamt

European Patent Office

Office européen des brevets

(19)

(11) Veröffentlichungsnummer: **0 046 865**
**B1**

(12) **EUROPÄISCHE PATENTSCHRIFT**

(45) Veröffentlichungstag der Patentschrift:
05.11.86

(51) Int. Cl.⁴: **C 01 B 25/12**, C 01 B 25/20

(21) Anmeldenummer: **81105596.1**

(22) Anmeldetag: **16.07.81**

(54) Verfahren zur Herstellung von Phosphorpentoxid unter Ausnutzung der Reaktionswärme.

(30) Priorität: **03.09.80 DE 3033109**

(43) Veröffentlichungstag der Anmeldung:
**10.03.82 Patentblatt 82/10**

(45) Bekanntmachung des Hinweises auf die Patenterteilung:
**05.11.86 Patentblatt 86/45**

(84) Benannte Vertragsstaaten:
**AT DE FR GB IT NL**

(56) Entgegenhaltungen:
**DE-C-426 388
DE-C-568 126
US-A-3 442 611**

**CHEMICAL ABSTRACTS, Band 91, Nr. 24, 10.
Dezember 1979, Seite 120, Nr. 195283d, Columbus,
Ohio, U.S.A.**

(73) Patentinhaber: **HOECHST AKTIENGESELLSCHAFT,
Postfach 80 03 20, D-6230 Frankfurt am Main 80
(DE)**

(72) Erfinder: **Daniel, Hellmuth, Kurt- Schumacher-
Strasse 10, D-5042 Erftstadt (DE)**
Erfinder: **Queck, Robert, Bunsenweg 10, D-5030
Hürth- Burbach (DE)**
Erfinder: **Kuxdorf, Bernhard, Von- Westerburg-
Strasse 12, D-5040 Brühl (DE)**
Erfinder: **Püsche, Herbert, Elsterweg 30, D-5042
Erftstadt (DE)**

LIBER, STOCKHOLM 1986

## Beschreibung

Die Erfindung betrifft ein Verfahren zur Herstellung von Phosphorpentoxid durch Verbrennen von elementarem Phosphor mit Hilfe von Luft unter Ausnutzung der Reaktionswärme zur Gewinnung von Energie.

Es ist nach der DE-C-1 300 527 bekannt, Phosphorpentoxid und Polyphosphorsäure durch Oxidation von gelbem Phosphor und Absorption von $P_2O_5$ in Polyphosphorsäure herzustellen, wobei man zur gleichzeitigen Herstellung von festem, hexagonalem $P_2O_5$ und Polyphosphorsäure in einer ersten Reaktionszone, deren Wände auf Temperaturen unterhalb 150°C, vorzugsweise unterhalb 100°C, gekühlt sind, geschmolzenen, elementaren Phosphor mit einem molekularen Sauerstoff enthaltenden Gas im oberen Teil der Reaktionszone verbrennt einen Teil des gasförmig anfallenden $P_2O_5$ in der Reaktionszone kondensiert, das feste $P_2O_5$ aus dem unteren Teil der Reaktionszone austrägt und die die Reaktionszone verlassenden und nicht abgeschiedenes $P_2O_5$ enthaltenden Abgase einer zweiten Reaktionszone zuführt, in welcher man zur Herstellung von Polyphosphorsäure in bekannter Weise eine Polyphosphorsäure, die einen geringeren Gehalt an $P_2O_5$ als die als Endprodukt gewünschte Polyphosphorsäure aufweist, im Kreislauf führt und darin das in den Abgasen der ersten Reaktionszone enthaltene $P_2O_5$ absorbiert.

Vorbeschriebener Prozeß der Verbrennung von gelbem Phosphor in Gegenwart von überschüssiger Luft ist bekanntlich stark exotherm, wobei eine Wärmemenge von 5813 Kcal, entsprechend 24 233 KJ pro kg verbrannten Phosphors freigesetzt wird, die durch intensive Kühlung der Wände des Verbrennungsraumes auf Temperaturen unterhalb 100°C möglichst schnell abgeführt werden muß. Eine besondere Schwierigkeit liegt hierbei in der richtigen Werkstoffauswahl für die Verbrennungskammer, in der die Phoaphoroxidation durchgeführt wird. Die hohe Flammentemperatur, die Anwesenheit von Sauerstoff, die hohe Aggressivität sowohl der heißen Phosphorpentoxiddämpfe als auch des Phosphorsäurenebels, der aus dem Phosphorpentoxid und dem in der Luft bzw. im Sauerstoff enthaltenen Waaserdampf gebildet wird, verursachen eine sehr starke Korrosion an der Innenwand der Verbrennungskammer. Das Korrosionsproblem ist verständlicherweise umso gravierender, je höher die Kühltemperatur in den Kühlelementen der Verbrennungskammer gewählt wird. Insofern war es bisher nicht möglich, die bei der Verbrennung von gelbem Phosphor in überschüssiger Luft anfallende Reaktionswärme einer weiteren technischen Nutzung zuzuführen, vielmehr mußten die auftretenden Wärmemengen unter Aufwendung erheblicher Kühlwassermengen nutzlos abgeführt werden.

Das Problem der Rückgewinnung und Nutzbarmachung der bei der Verbrennung von gelbem Phosphor mit Luft entstehenden Reaktionswärme wird in der Literatur bereits von A.D. Mikhailin und Mitarbeitern in "The Soviet Chemical Industry 5", Nr. 7, July 1973 diskutiert und dabei auf die Korrosionsgefahr der dem Verbrennungsprozeß ausgesetzten Werkstoffe verwiesen. Selbst hochwertige Spezialedelstähle auf Nickelbasis wurden hierbei auf Dauer als nicht geeignet erkannt.

Aus der jP-A-79 84 890 ist eine Anlage zur Herstellung von Phosphorsäure bekannt, welche aus einem Verbrennungsofen besteht, dessen wärmeabsorbierenden Wände aus einem äußeren Gehäuse, aus einer wärmeisolierenden Schicht sowie aus Kesselrohren bestehen, wobei die Kesselrohre mit den Verbrennungsgasen in Berührung kommen. Im Verbrennungsofen wird zur Erzeugung phosphorpentoxidhaltiger Verbrennungsgase Phosphor mit trockener Luft verbrannt und die Temperatur der wärmeabsorbierenden Wände so reguliert, daß sie oberhalb der Verfestigungstemperatur von Phosphorpentoxid liegt. Durch die Kesselrohre der wärmeabsorbierenden Wände zirkuliert ein Kuhlmittel, wobei das Kühlmittel in Form von Dampf oder heißem Wasser aus dem System entnommen und die darin enthaltene Wärmemenge zurückgewonnen wird, während eine entsprechende Menge abgekühltes Kühlmittel ergänzt wird. Dabei sollen die Kesselrohre weder aus Kohle bestehen noch mit einer Schicht aus Kohle oder feuerfestem Material versehen sein.

Aus der DE-A-2 736 765 ist eine Vorrichtung zur Herstellung von hexagonalem Phosphorpentoxid bekannt, welche aus einer Verbrennungskammer besteht, deren Innenwand aus Kühlrohren besteht. Die Verbrennungskammer ist über einen Gaskühler mit einem Kondensationsraum verbunden, wobei der Gaskühler ebenfalls aus einem Kühlrohrsystem besteht und die Wände des Kondensationsraums mit einer Kühlvorrichtung versehen sind.

In allen Abschnitten der Verbrennungskammer ist durch Zwangszuführung des Kühlwassers eine intensive Kühlung gewährleistet. In der Innenwand der Rohrbündel wird glasartiges polymeres Phosphorpentoxid $(P_2O_5)_x$ abgeschieden. Dies ist hier erwünscht, weil durch diese Schicht die darunterliegenden Kühlrohre geschützt werden. Die Außenwandtemperatur wird unter 100°C gehalten. Die Oberflächentemperatur der Schutzschicht aus $(P_2O_5)_x$ beträgt etwa 650°C. Das gasförmige $P_4O_{10}$ verläßt die Verbrennungskammer mit einer Temperatur von 800 bis 900°C.

Im Gaskühler erfolgt eine Abkühlung des $P_4O_{10}$-haltigen Gases auf eine Temperatur von 650 bis 400°C. In der sich anschließenden Kondensationskammer kann es schlagartig auf < 300°C abgekühlt werden.

Auf diese Art und Weise wird die gewünschte Phosphorpentoxidmodifikation erhalten.

Es wurde nun gefunden, daß die Herstellung von Phosphorpentoxid durch Verbrennung von gelbem Phosphor mit Luft unter höchstmöglicher Ausnutzung der Reaktionswärme, ohne daß eine den Wärmeübergang behindernde Belagsbildung auftritt, und unter Überwindung der bekannten Korrosionsprobleme ohne Schwierigkeiten betrieben werden kann, wenn man das Verfahren unter bestimmten Bedingungen durchführt.

Gegenstand der Erfindung ist somit ein Verfahren zur Herstellung von Phosphorpentoxid durch Verbrennen von elementarem Phosphor mit Hilfe von Luft unter Ausnutzung der Reaktionswärme zur Energiegewinnung, wobei man die Phosphorverbrennung mit getrockneter Luft in einer Verbrennungskammer durchführt, deren metallische Wände als ein Hohlräume aufweisendes Kühlsystem ausgebildet sind, und wobei in dem Kühlsystem eine als Wärmeträger geeignete Flüssigkeit bzw. ein Flüssigkeits-Dampf-Gemisch unter Erwärmung im Kreislauf geführt wird, und wobei man die im Kühlsystem aufgeheizte Flüssigkeit bzw. den entstandenen Dampf aus dem Kühlsystem kontinuierlich abzieht und durch eine äquivalente Menge abgekühlter Flüssigkeit ersetzt, und wobei man das aus der Verbrennungskammer abströmende heiße dampfförmige Phosphorpentoxid kondensiert oder zu Folgeprodukten weiterverarbeitet, welches dadurch gekennzeichnet ist, daß die getrocknete Luft einen Wassergehalt von 0,01 bis 5 g/m³ aufweist, daß die im Kreislauf geführte Flüssigkeit bzw. das Flüssigkeit-Dampf-Gemisch Temperaturen von 150 bis 500°C bei Drucken von 1 bis 150 bar aufweist, und daß das aus der Verbrennungskammer abströmende Phosphorpentoxid Temperaturen von 300 bis 1000°C aufweist.

Die zur Verbrennung des Phosphors verwendete getrocknete Luft besitzt vorzugsweise einen Wassergehalt von 0,3 bis 0,1 g/m³ Luft.

Weiterhin hat es sich als vorteilhaft erwiesen, als Wärmeträger bzw. im Kreislauf geführte Flüssigkeit Wasser einzusetzen. Die im Kreislauf geführte Flüssigkeit bzw. das Flüssigkeits-Dampfgemisch wird durch die Wärmeaufnahme im allgemeinen auf Temperaturen von 200 bis 400°C bei Drucken von 15 bis 90 bar erwärmt.

Zur Vermeidung von Korrosion ist es empfehlenswert, die Wände bzw. das Kühlsystem der Verbrennungskammer aus nichtrostendem Stahl nach DIN 17 440 zu fertigen. Die Wände der Verbrennungskammer können beispielsweise aus einer metallischen Rohrwand mit direkt verschweißten Rohren oder einer Flossenrohrwand oder einer Membranrohrwand bestehen.

Die bei der Verbrennung des Phosphors entstehenden Phosphorpentoxiddämpfe verlassen die Verbrennungskammer mit einer Temperatur von 300 bis 1000°C. Sie können entweder kondensiert oder zu Phosphorsäure weiterverarbeitet werden.

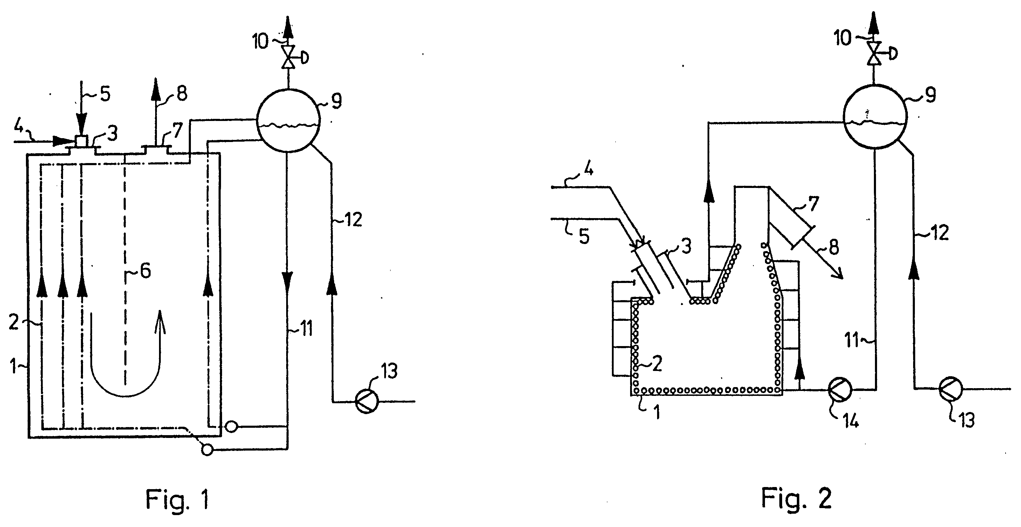

Zwei beispielhafte Ausführungsformen von Vorrichtungen, welche sich zur Durchführung des Verfahrens der Erfindung bewährt haben, sind in der Zeichnung als Figur 1 und 2 dargestellt.

Figur 1 zeigt im wesentlichen die Verbrennungskammer zur Verbrennung des gelben Phosphors, welche aus dem Schutzmantel mit Isolierung (1) für die metallische Rohrwand (2) besteht, wobei die einzelnen Rohre vertikal angeordnet sind. Die Verbrennungskammer ist weiterhin mit einer Einrichtung (3) zur Zerstäubung des gelben Phosphors mit Luft ausgestattet, wobei die Luft über die Leitung (4) und der zuvor verflüssigte Phosphor über die Leitung (5) zugeführt werden. Im Inneren der Verbrennungskammer befindet sich eine Trennwand aus Rohren (6) zur Umlenkung der Verbrennungsgase bzw. der Phosphorpentoxiddämpfe, welche über die Öffnung (7) und Leitung (8) abgezogen werden. Zur Aufnahme der Verbrennungswärme führen die einzelnen Rohre der Rohrwand (2) beispielsweise Wasser, welches teilweise verdampft. Die Trennung von Dampf und Wasser erfolgt im Abscheider (9), wobei der Dampf über die Leitung (10) abgezogen wird.

Nichtverdampftes Wasser kehrt über die Leitung (11) in die Rohrwand (2) zurück. Durch Verdampfung eingetretene Wasserverluste werden durch Frischwasserzufuhr über die Leitung (12) mit Speisepumpe (13) ergänzt.

Die Vorrichtung gemäß Figur 2 unterscheidet sich von der Vorrichtung gemäß Figur 1 lediglich dadurch, daß die einzelnen Rohre der Rohrwand (2) horizontal gelagert sind. Dies bedingt einen Zwangsumlauf des Wassers, welcher durch die zusätzliche Umlaufpumpe (14) bewirkt wird.

Die technische Fortschrittlichkeit des erfindungsgemäßen Verfahrens ist unverkennbar, da es bisher keine Möglichkeit zur Nutzung der bei Durchführung des Verfahrens entstehenden Reaktionswärme gab. Vorurteile hinsichtlich der ausreichenden Widerstandsfähigkeit der Werkstoffe der Vorrichtung bei den zur Dampfbildung erforderlichen Kühltemperaturen in der Verbrennungskammer von über 100°C hielten den Fachmann davon ab, der Lösung des erfindungsgemäßen Problems näherzutreten. Nachdem unter den Verfahrensbedingungen der Erfindung überraschenderweise keine den guten Übergang der Reaktionswärme auf den flüssigen Wärmeträger, z.B. Wasser, behindernde Belagsbildung an den Rohren der Rohrwand auftritt und andererseits eine Korrosion des Werkstoffes der Brennkammer aufgrund der Verwendung vorgetrockneter Luft nicht in dem zu erwartenden Maße eintritt, weist die Erfindung einen gangbaren Weg zur Herstellung von Phosphorpentoxid unter gleichzeitiger wirtschaftlicher Nutzung von bisher ungenutzter Energie.

Das erfindungsgemäße Verfahren wird durch die nachfolgenden Beispiele nähe erläutert.

## Beispiel 1

In einer Verbrennungskammer mit Rohrwänden (2) aus nichtrostendem Stahl wurden pro Stunde 100 l oder 170 kg elementarer, flüssiger, gelber Phosphor mit einer Temperatur von 75° C in Gegenwart von trockener Luft bei einem Druck von 6 bar verbrannt. Die bei der Verbrennung freiwerdende Reaktionswärme von 4 GJ/h wurde zu 60 % durch die Rohrwände auf die Wärmeträgerflüssigkeit in Form von vollentsalztem und entgastem Wasser übertragen. Hierbei trat eine teilweise Verdampfung des Wassers ein.

Das Wasser-/Dampfgemisch stieg durch die einzelnen Rohre (2) in ein Sammelrohr und dann in den Dampfabscheider (9), in welchem eine Trennung von Dampf und Flüssigkeit stattfand. Der Dampfdruck im Abscheider wurde durch ein Druckregelventil in der Leitung (10) auf 20 bsr gehalten und der erzeugte Sattdampf in einer Menge von 1,1 t pro Stunde über die Leitung (10) abgezogen. Die flüssige Phase im Abscheider (9) wurde über die Umlaufleitung (11) und einem unteren Verteilerrohr den Steigrohren der Rohrwand (2) zugeführt. Damit war der Kreis des Flüssigkeitsumlaufs, bewirkt durch die Dichteunterschiede in dem Umlaufsystem, geschlossen.

Durch eine am Abscheider (9) angebrachte Niveauregelung war gewährleistet, daß das Kühlsystem stets mit ausreichend Wasser versorgt war, wobei Frischwasserzusätze über die Leitung (12) erfolgten. Der Brenner (3) war in der Verbrennungskammer nach unten angeordnet, wodurch der Abschnitt der Kammer in der Nähe des Brenners von Strahlungswärme beaufschlagt wurde. In diesem Teil wurden Wandtemperaturen zwischen 300 und 400° C gemessen. Im unteren Bereich der Brennkammer erfolgte eine Umlenkung der Verbrennungsgase um 180°, so daß Phosphorpentoxiddämpfe die Brennkammer über den Abzug (7) verlassen konnten.

## Beispiel 2

Es wurde analog Beispiel 1 verfahren, wobei jedoch die Rohre der Verbrennungskammer teilweise horizontal oder nur schwach steigend angeordnet waren. Außerdem wurde die Kreislaufführung des Wärmeträgers Wasser in den Rohren mit Hilfe einer Pumpe aufrechterhalten und somit ein Zwangsumlauf des Wassers geschaffen.

## Patentansprüche

1. Verfahren zur Herstellung von Phosphorpentoxid durch Verbrennen von elementarem Phosphor mit Hilfe von Luft unter Ausnutzung der Reaktionswärme zur Energiegewinnung, wobei man die Phosphorverbrennung mit getrockneter Luft in einer Verbrennungskammer durchführt, deren metallische Wände als ein Hohlräume aufweisendes Kühlsystem ausgebildet sind, und wobei in dem Kühlsystem als Wärmeträger für die Reaktionswärme geeignete Flüssigkeit bzw. ein Flüssigkeits-Dampfgemisch unter Erwärmung im Kreislauf geführt wird, und wobei man die im Kühlsystem aufgeheizte Flüssigkeit bzw. den entstandenen Dampf aus dem Kühlsystem kontinuierlich abzieht und durch eine äquivalente Menge abgekühlter Flüssigkeit ersetzt, und wobei man das aus der Verbrennungskammer abströmende heiße dampfförmige Phosphorpentoxid kondensiert oder zu Folgeprodukten weiterverarbeitet, dadurch gekennzeichnet, daß die getrocknete Luft einen Wassergehalt von 0,01 bis 5 g/m$^3$ aufweist, daß die im Kreislauf geführte Flüssigkeit bzw. das Flüssigkeits-Dampfgemisch Temperaturen von 150 bis 500° C bei Drucken von 1 bis 150 bar aufweist, und daß das aus der Verbrennungskammer abströmende dampfförmige Phosphorpentoxid Temperaturen von 300 bis 1000° C aufweist.

2. Verfahren nach Anspruch 1, dadurch gekennzeichnet, daß die getrocknete Luft einen Wassergehalt von 0,1 bis 0,3 g/m$^3$ aufweist.

3. Verfahren nach Anspruch 1 oder 2, dadurch gekennzeichnet, daß man das aus der Brennkammer abströmende dsmpfförmige Phosphorpentoxid zu Phosphorsäure weiterverarbeitet.

## Claims

1. Process for making phosphorus pentoxide by subjecting elemental phosphorus to combustion with air with utilization of the reaction heat for the production of energy, the phosphorus combustion being carried out with dried air inside a combustion chamber whose metallic walls are arranged so as to form a cooling system with cavities therein, in which a liquid or liquid/vapormixture suitable as a heat carrier for the reaction heat is circulated while being heated, the liquid heated in the cooling system or vapor formed is continuously taken from the cooling system and replaced by an equivalent quantity of cooled liquid, and hot gaseous anhydride coming from the combustion chamber is condensed or worked up into derivatives, characterized in that the dried air contains 0.01 to 5 g water per m$^3$, the liquid or liquid/vapormixture under circulation has a temperature of 150 to 500° C under a pressure of 1 to 150 bars, and the gaseous phosphorus pentoxide caming from the combustion chamber has a temperature of 300 to 1000° C.

2. Process as claimed in claim 1, wherein the dried air contains 0.1 to 0.3 g water per m$^3$.

3. Process as claimed in claim 1 or 2, wherein the gaseous phosphorus pentoxide coming from the combustion chamber is worked up into phosphoric acid.

## Revendications

1. Procédé de préparation d'anhydride phosphorique par combustion de phosphore élémentaire à l'aide d'air avec utilisation de la chaleur de réaction pour la production d'énergie, dans lequel on effectue la combustion du phosphore avec de l'air séché dans une pour former un système réfrigérant comportant des vides, et dans lequel on fait circuler en le réchauffant un liquide ou un mélange vapeur/liquide convenant comme caloporteur, on retire en continu du système réfrigérant le liquide réchauffé ou la vapeur formée et on le remplace par une quantité équivalente de liquide refroidi et on condense ou on transforme en dérivés l'anhydride phosporique gazeux chaud sortant de la chambre de combustion, caractérisé en ce que l'air séché présente une teneur en eau de 0,01 - 5 g/m$^3$, le liquide ou le mélange vapeur/liquide en circulation présente une température de 150 - 500°C sous des pressions de 1 à 150 bars et l'anhydride phosphorique gazeux sortant de la chambre de combustion présente des températures de 300 - 1000°C.

2. Procédé selon la revendication 1, caractérisé en ce que l'air séché présente une teneur en eau de 0,1 - 0,3 g/m$^3$.

3. Procédé selon la revendication 1 ou 2, caractérisé en ce que l'anhydride phosphorique gazeux sortant de la chambre de combustion est transformé en acide phosporique.

Fig. 1

Fig. 2

0 046 865